Europäisches Patentamt

European Patent Office

Office européen des brevets

(19)

(11) Veröffentlichungsnummer: **0 343 270 B1**

(12)

# EUROPÄISCHE PATENTSCHRIFT

(45) Veröffentlichungstag der Patentschrift: **25.03.92**

(51) Int. Cl.<sup>5</sup>: **B62D 65/00**

(21) Anmeldenummer: **88108383.6**

(22) Anmeldetag: **26.05.88**

(54) **Mitnahmeeinrichtung mit einem Transportrahmen und Abstützungen (Skid) zum Fördern von Kraftfahrzeugen.**

(43) Veröffentlichungstag der Anmeldung:
**29.11.89 Patentblatt 89/48**

(45) Bekanntmachung des Hinweises auf die
Patenterteilung:
**25.03.92 Patentblatt 92/13**

(84) Benannte Vertragsstaaten:
**BE DE ES FR GB IT SE**

(56) Entgegenhaltungen:
**EP-A- 0 134 255**
**FR-A- 2 215 368**
**US-A- 3 608 745**

**PATENT ABSTRACTS OF JAPAN, Band 10,
Nr. 346 (M-537) (2402), 21. November 1986; &
JP-A-61 146 691 (NAKANISHI KINZOKU KO-
GYO) 04.07.1986**

(73) Patentinhaber: **CARL SCHENCK AG**
**Landwehrstrasse 55 Postfach 40 18**
**W-6100 Darmstadt(DE)**

(72) Erfinder: **Walz, Reinhold, Dipl.-Ing.**
**Steinacker Strasse 6 a**
**W-6101 Rossdorf(DE)**
Erfinder: **Hildebrandt, Klaus**
**Hans-Sachs-Weg 1**
**W-6100 Darmstadt 12(DE)**
Erfinder: **Willgerodt, Udo**
**Berliner Strasse 9**
**W-6108 Weiterstadt(DE)**

(74) Vertreter: **Dallhammer, Herbert, Dipl.-Ing.**
**CARL SCHENCK AG Patentabteilung Postfach 4018 Landwehrstrasse 55**
**W-6100 Darmstadt(DE)**

Rank Xerox (UK) Business Services

**Beschreibung**

Die Erfindung betrifft eine Mitnahmeeinrichtung mit einem Transportrahmen und Abstützungen (Skid) zum Fördern insbesondere herzustellender Kraftfahrzeuge durch Montage, Prüf- und weitere Arbeitsplätze, wobei der Skid wie das Kraftfahrzeug auch während der Montage, Prüfung und der weiteren Bearbeitung im Montage, Prüf- und weiteren Arbeitsplatz verbleibt.

Bei der Herstellung, insbesondere bei der Fertigmontage von Kraftfahrzeugen werden diese mittels Skid über Längs- und Querförderbahnen, welche die einzelnen Prüfstationen verbinden, durch die Prüfstationen transportiert, wobei der Skid auch während des Prüfvorgangs in der Prüf- oder Bearbeitungsstation nach Trennung vom herzustellenden Kraftfahrzeug verbleibt. Nach durchgeführter Prüfung oder Nachbesserung wird das bereits mit Rädern versehene Fahrzeug entweder zum nächsten Prüfstand transportiert oder es kann aus dem letzten Prüfstand über den Skid als Hilfsmittel mit eigener Kraft herausgefahren werden. Dies gilt auch bei Betriebsstörungen im Endmontagebereich oder bei vorhergehenden Prüfständen, wenn die Prüfstände in der Fertigungslinie nicht hintereinander, sondern quer nebeneinander angeordnet sind und die Fördereinrichtung durch die Prüfstände quer zu deren Längsrichtung verläuft. Durch EP-A-0 134 255 ist eine derartige Einrichtung bekannt geworden.

Bei der dort offenbarten Einrichtung wird das Kraftfahrzeug im ausgefederten Zustand seiner Räder über Stützen oder im eingefederten Zustand seiner Räder über im Skid angeordnete verschiebbare Bleche durch die verketteten Prüfstände transportiert. Um zu gewährleisten, daß die im eingefederten Zustand der Räder transportierten Kraftfahrzeuge in den Prüfständen vom Skid freikommen, obwohl der Skid mit im Prüfstand bleibt, sind dort in den Blechen Schlitze vorgesehen, durch die Hilfsmittel stützend an den Kraftfahrzeugrädern angreifen können, während die Bleche die Fahrzeugräder durch Verschieben freigeben. Anschließend wird das Kraftfahrzeug mit seinen Rädern durch Absenken der Hilfsmittel auf die Prüfeinrichtungen aufgesetzt. Auch handelt es sich beim Stand der Technik um einen geschlossenen Skid, bei dem die Durchtrittsöffnungen für die Kraftfahrzeugräder freigegeben werden sollen.

Es tritt nunmehr die Forderung auf, derartige Prüfzeiten weiter zu verringern und gleichzeitig während bestimmter Prüfvorgänge oder in bestimmten Fertigmontagearbeitsplätzen sowohl Untersuchungen an den Rädern der Kraftfahrzeuge an den Aufhängungen der Räder am Kraftfahrzeug und im Bodenbereich des Kraftfahrzeugs gleichzeitig durchzuführen und dafür Sorge zu tragen, daß bei rotierenden Fahrzeugrädern ein unbefugtes Betreten des die Räder antreibenden Prüfstandes unmöglich gemacht wird. Ausgehend hiervon liegt der Erfindung die Aufgabe zugrunde, bei einer Prüfung, insbesondere während der Fertigung von mit Rädern versehenen Fahrzeugen eine Zugänglichkeit zum Fahrzeugboden und gleichzeitig eine freie Zugänglichkeit zu den Aufstandsflächen seiner Räder im eingefederten Zustand zur Überprüfung und Messung der im späteren Fahrbetrieb tatsächlich an der Aufstandsfläche der Räder im eingefederten Zustand auftretenden Belastungen zu ermöglichen, wobei der Skid und das Fahrzeug gemeinsam in der Prüf- oder Meßstation verbleiben und wobei die Abstützungen für die Fahrzeugräder gleichzeitig als Sicherheitseinrichtungen ausgebildet sind. Diese Aufgabe wird durch die kennzeichnenden Merkmale des Anspruchs 1 gelöst. Durch die erfindungsgemäße Anordnung von insbesondere vier an den Längsholmen des Rahmens des Skids angeordnete Abstützungen wird eine freie Zugänglichkeit der kompletten Unterseite des Kraftfahrzeugs bei eingefederten Rädern innerhalb eines Arbeitsplatzes oder Prüfbereichs erreicht.

In Ausgestaltung der Erfindung wird in Anspruch 2 erfindungsgemäß vorgeschlagen, im Bereich der Aufstandsflächen der Räder auf den Abstützungen Öffnungen vorzusehen und mindestens ein Paar zueinander ausgerichtete Abstützungen an den Holmen verschiebbar anzuordnen. Hierdurch wird in besonders vorteilhafter Weise in Ausgestaltung des Erfindungsgegenstandes auch eine freie Zugänglichkeit zu den Aufstandsflächen der Räder ermöglicht, ohne daß es weitere Hilfsmittel bedarf, wenn es sich bei den Prüf- und Meßgeräten um hydraulisch, elektrisch oder pneumatisch betätigbare Zylinder handelt, die direkt durch die Öffnungen in Prüfberührung mit den Aufstandsflächen der Räder kommen können. Es ist selbstverständlich, daß die Öffnungen in den Abstützungen so ausgestaltet sind, daß Kraftfahrzeuge mit verschiedener Spurbreite von ein und demselben Skid aufgenommen werden werden können. Hierzu besitzt jede Abstützung erfindungsgemäß einen in Richtung auf die Mitte des Skids weisenden offenen Längsschlitz. Hierdurch kann gleichzeitig nicht nur eine Prüfung an der Aufstandsfläche des Rades durchgeführt werden, sondern gleichzeitig können auch Prüfungen an den Aufhängungen der Räder selbst durchgeführt werden, und zwar mit direkt durch die Schlitze greifenden zusätzlichen Meßmitteln, wie Erschütterungsaufnehmer. Die in Anspruch 2 weiter unter Schutz gestellte Verschiebbarkeit zueinander ausgerichteter Abstützungen dient zur Erweiterung des Einsatzbereichs eines derartigen Skids auch auf Fahrzeuge mit verschiedenem Radstand. Damit ergibt sich die weitere Besonderheit der Erfindung, daß mit einem Skid eine Vielzahl verschiedener Bautypen von Kraftfahrzeugen transportiert werden können und daß dieser Skid auch während des Prüfvorgangs oder Arbeitsvorgangs im Prüf- oder Arbeitsbereich verbleiben kann, wobei stets die Räder des Kraftfahrzeugs im eingefederten Zustand verbleiben.

In noch weiterer Ausgestaltung des Erfindungsgegenstandes wird in Anspruch 3 zur Sicherung des unbefugten Eindringens in den Skid-Bereich während der Bearbeitung vorgeschlagen, die entstehenden Öffnungen zwischen den Abstützungen und den Querholmen abzudecken. Damit ist bei freier Zugänglichkeit zur Unterseite des kompletten Fahrzeugs die Gewähr dafür gegeben, daß kein unbefugter zwischen Skid und Fahrzeug abstürzen kann.

In Anspruch 4 wird eine andere Möglichkeit einer derartigen Abdeckung unter Schutz gestellt, bei der auch erfindungsgemäß die Gewähr dafür gegeben ist, daß ein Abstürzen vor und hinter dem Fahrzeug und den Querholmen des Skids vermieden wird.

Durch die in Anspruch 5 unter Schutz gestellte Anordnung von Achsen und Zapfen im Bereich der Längsholme wird auch die Möglichkeit der Sicherung des Antriebsbereichs der Räder offenbart, da hierdurch nach Übernahme der Räder auf die antreibenden Einrichtungen der Prüfeinrichtungen durch Hochklappen der Abstützungen eine Sicherung gegen unbefugtes Betreten des Antriebsbereichs geschaffen wird.

Die in Anspruch 6 unter Schutz gestellte weitere Ausgestaltung des Erfindungsgegenstandes schlägt vor, jeder Abstützung zugeordnet am Längsholm einen bewegbaren Stößel vorzusehen, der erfindungsgemäß mit der Abstützung so zusammenwirkt, daß nach Unterstützung der Räder oder der Aufstandsflächen der Räder durch Absenken des Skids oder durch Anheben der Prüfeinrichtung oder einer Hilfseinrichtung oder durch gleichzeitige Anwendung beider Bewegungen die Abstützung aus ihrer horizontalen Lage, der Traglage, zwischen den Prüf- oder Montageständen in eine hierzu vertikale Sicherheitslage gebracht wird. Nach Beendigung des Prüfvorgangs wird die Abstützung für jedes Rad wieder in die Traglage zurückgeschwenkt.

Zur Unterstützung dieser Vorgänge wird gemäß Anspruch 7 vorgeschlagen, die Abstützungen federbelastet an den Arretierungen, wie sie insbesondere in Anspruch 5 vorgeschlagen werden, anliegen zu lassen.

Der Erfindungsgegenstand ist nicht beschränkt auf die Herstellung von Kraftfahrzeugen, wenn diese mit Rädern versehen sind, die im eingefederten Zustand, also das Fahrzeug bereits tragend, transportiert werden sollen. Der Erfindungsgegenstand läßt sich ebenfalls anwenden für eine serienmäßige Untersuchung bereits fertiger Fahrzeuge im Rahmen vorgeschriebener Prüfungsintervalle. Auch kann der Erfindungsgegenstand angewandt werden bei nicht angetriebenen Fahrzeugen, beispielsweise bei Anhängern für Kraftfahrzeuge, hierbei insbesondere Anhänger von Tiefladerschleppmaschinen.

In der nachfolgenden Zeichnung wird die Erfindung anhand von Ausführungsbeispielen näher erläutert:

Es zeigen:

Fig. 1:  eine Draufsicht auf eine Mitnahmeeinrichtung gemäß der Erfindung

Fig. 2:  einen Längsschnitt durch eine Mitnahmeeinrichtung gemäß Fig. 1

Fig. 3:  Längsschnitt durch eine Mitnahmeeinrichtung in einer Prüfstation

Fig. 4:  Querschnitt durch eine Mitnahmeeinrichtung mit Prüfstand und angehobener Abstützung

Fig. 5:  Längsschnitt durch eine Mitnahmeeinrichtung in einer anderen Prüfstation

Fig. 6:  Querschnitt durch eine Mitnahmeeinrichtung im Bereich der Abstützung mit einer Hebevorrichtung für die Abstützung und

Fig. 7:  einen weiteren Querschnitt durch eine Mitnahmeeinrichtung im Bereich der Abstützung mit einer anderen Hebeeinrichtung für die Abstützung

Gleiche Bauteile werden in den einzelnen Figuren mit den selben Bezugsziffern bezeichnet.

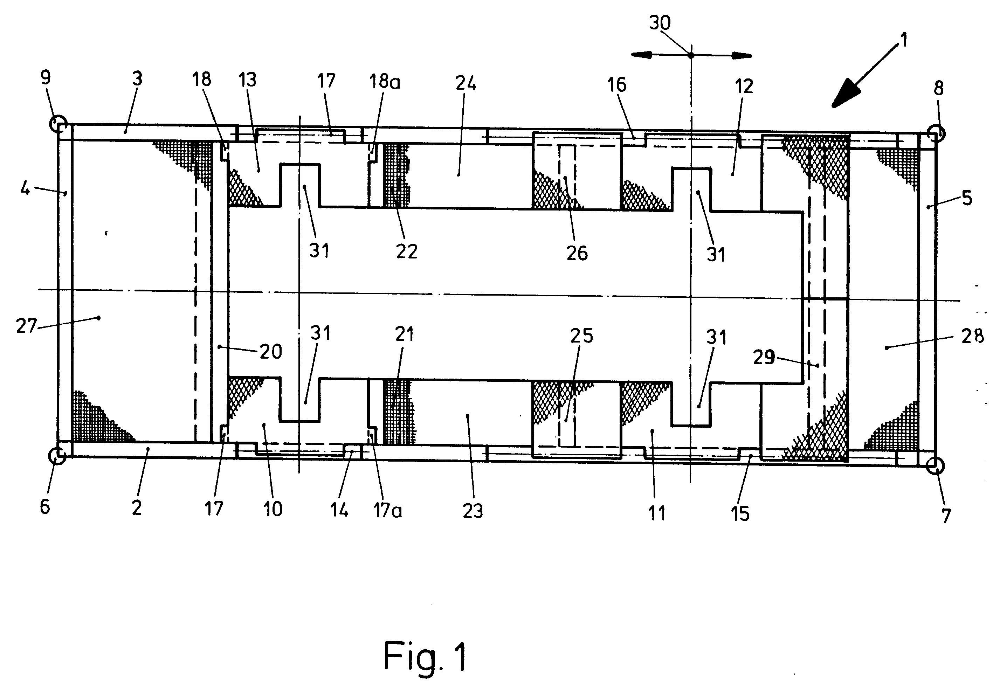

Gemäß Fig. 1 besteht eine Mitnahmeeinrichtung (Skid) 1 im wesentlichen aus Längsholmen 2, 3 und Querholmen 4, 5, die einen im wesentlichen rechteckigen, innen offenen Skidrahmen bilden. An den äußeren Ecken dieses Skidrahmens sind Führungsrollen 6, 7, 8, 9 angeordnet, die den Skidrahmen an nicht dargestellten Seitenbegrenzungen führen, wenn der Skidrahmen beispielsweise auf einer ebenfalls nicht dargestellten, angetriebenen Rollenbahn zwischen den einzelnen Prüfstationen transportiert wird, wobei die Rollenbahnen aus glatten Rollen bestehen und wobei der beladene Skid oder auch der leere Skid durch sein Gewicht mittels Reibung von der angetriebenen Rollenbahn mitgenommen wird. Anstelle der Rollenbahnen können auch Gurtförderer treten, die beispielsweise aus mit Stahleinlagen verstärkten Gummi-oder Kunststoffbändern bestehen und die unterhalb der Längsholme 2, 3 eine Längsförderung oder unterhalb der Querholme 4, 5 bei einer Querförderung verlaufen. Zur Führung des Skidrahmens auf diesen ebenfalls nicht dargestellten Gurtförderern dienen ebenfalls die Führungsrollen 6, 7, 8, 9. Wird anstelle dieser Fördervorrichtungen eine Rollenbahn aus Spurkranzrollen verwendet, die ebenfalls an der Unterseite der Holme angreifen und die angetrieben ist, übernehmen die Spurkränze gleichzeitig eine Führung des Skidrahmens an den Seitenflächen der Holme, so daß in diesem Falle die Führungsrollen 6, 7, 8, 9 nicht erforderlich sind. Auch ist es möglich, den Skidrahmen entweder im leeren Zustand oder im beladenen Zustand mittels Preßantrieb anzutreiben; hierbei werden beispielsweise angetriebene Rollen an die Seitenflächen der Längsholme 2 und 3 angepreßt und ermöglichen somit einen Längsvorschub des Skidrahmens; in diesem Falle liegt der Skidrahmen mit der Unterseite seiner Holme auf glatten Rollen auf.

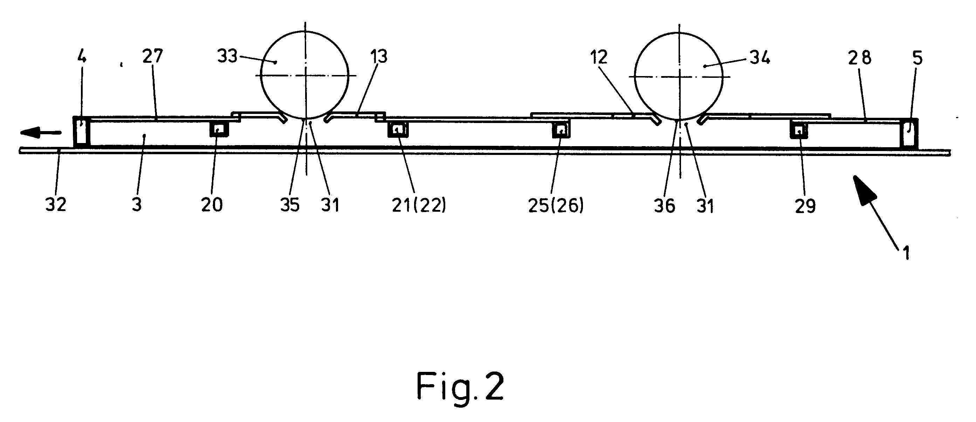

Abstützungen 10, 11, 12, 13 sind an in den Seitenholmen 2, 3 angeordneten Achsen 14, 15, 16, 17 drehbeweglich gelagert und stützen sich gemäß Ausführungsbeispiel nach Fig. 1 über Arretierungen 17, 17a und 18, 18a, und zwar in diesem Falle die Abstützungen 10 und 13, auf einem durchgehenden Stützholm 20 und Teilstützholmen 21, 22 ab (vgl. auch Fig. 2). Zwischen den Abstützungen 10 und 11 einerseits und den Abstützungen 12 und 13 andererseits ist je eine Abdeckung 23 bzw. 24 vorgesehen, die zum einen mit den Teilstützholmen 21, 22 und zum anderen mit weiteren Teilstützholmen 25, 26 verbunden ist. Die Abdeckungen 23 bzw. 24 besitzen die gleiche Breite wie die Abstützungen 10, 11, 12 und 13, so daß zwischen den Abstützungen 10 und 13 und den Abstützungen 11 und 12 eine völlig freie Fläche entsteht, durch die die Unterseite eines Kraftfahrzeugs in Augenschein genommen und gleichzeitig geprüft werden kann, wobei die Sicherheit besteht, daß zwischen Kontur des Fahrzeugs und Skidrahmen kein Gegenstand eindringen kann oder ein unbefugter verunfallen kann.

Der Skidrahmen wird an seinem Querholm 4 bis zum Stützholm 20 von einer weiteren Abdekkung 27 abgeschossen. Eine noch weitere Abdekkung 28 erstreckt sich in der Breite der offenen Fläche zwischen den Abdeckungen 23, 24 bis zu einem weiteren Stützholm 29 und in der Breite der Abdeckungen 23, 24 über diesen weiteren Stützholm 29 hinaus in Richtung auf die Abstützungen 11, 12. Hierdurch wird es ermöglicht, die zueinander ausgerichteten Abstützungen 11, 12 entsprechend dem nach links und rechts weisenden Pfeil 30 entlang den Längsholmen 2, 3 zu verschieben, um Fahrzeuge verschiedener Radstände mit einem Skid 1 bei Beibehaltung aller Vorteile benutzen zu können.

Wie in Figur 1 dargestellt, tragen die Abstützungen 10, 11, 12 und 13 gleiche Öffnungen 31, die schlitzförmig und rechteckig nach innen auf die freie Fläche des Skids zu geöffnet sind, so daß auch Kraftfahrzeuge mit verschiedener Spurbreite ebenfalls untersucht werden können.

In Fig. 2 wird der Skid von einer Fördereinrichtung getragen, die aus Fördergurten besteht und von denen lediglich der unter dem Holm 3 angeordnete und angetriebene Fördergurt 32 dargestellt ist. Eingefederte Räder 33, 34 eines nicht dargestellten Kraftfahrzeugs stützen sich auf den Abstützungen 12 und 13 ab und geben zufolge der Öffnung 31 Aufstandsflächen 35 bzw. 36 der Räder 33 bzw. 34 frei, so daß an diesen Stellen bereits während der Herstellung der Kraftfahrzeuge die im späteren Fahrbetrieb tatsächlich an der Aufstandsfläche der Räder im eingefederten Zustand auftretenden Belastungen geprüft werden können.

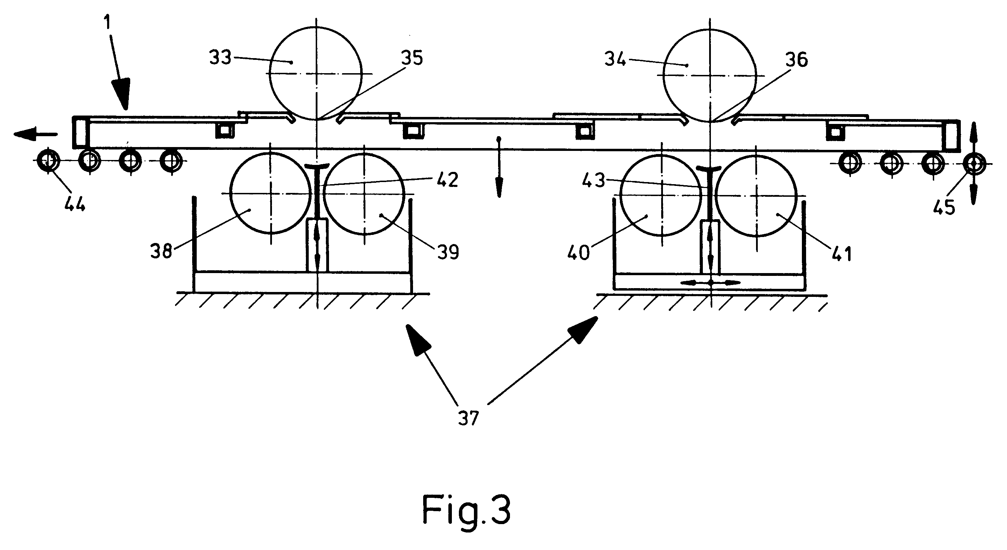

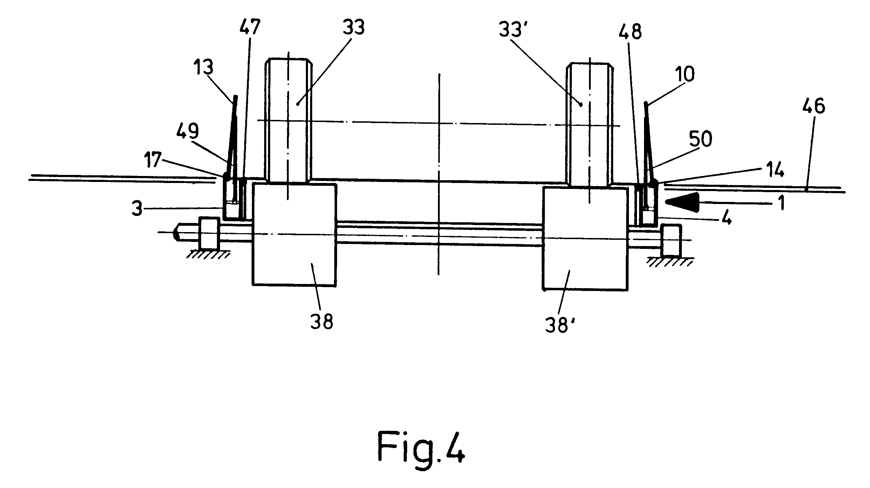

Im Bereich eines Prüfstandes, im Ausführungsbeispiel gemäß Fig. 3 soll es sich um einen Rollenprüfstand 27 handeln, wird nach positioniertem Einfahren des Skids 1 mit dem Fahrzeug, von dem die Räder 33, 34 dargestellt sind, zwischen dem jeweiligen Rollenpaar 38, 39 für die Vorderräder des Kraftfahrzeuges, von dem nur das Rad 33 dargestellt ist, bzw. dem Rollenpaar 40, 41 für die Hinterräder des Kraftfahrzeugs, von denen lediglich das Rad 34 dargestellt ist, ein Hubbügel 42 für die Vorderräder und ein Hubbügel 43 für die Hinterräder so weit ausgefahren, bis er mit den Aufstandsflächen 35 bzw. 36 der Vorderräder und Hinterräder in Eingriff kommt. Damit wird zunächst ohne Ausfederung der Kraftfahrzeugräder das Kraftfahrzeug an den Prüfstand übergeben. Gleichzeitig wird durch Absenken der Fördergurt 32 der Skid 1 in der Prüfstation abgesenkt. Im Ausführungsbeispiel nach Fig. 3 wurde anstelle der aus Fördergurten 32 bestehenden Förderbahn gemäß Fig. 2 eine Spurkranzrollenbahn 44 dargestellt, die ebenfalls in der Vertikalen heb- und senkbar ist, wie durch den nach oben und unten zeigenden Pfeil 45 dargestellt ist. Nach Absenken des Skids 1 so weit, daß seine Oberkante mit dem Prüfstandsniveau 46 (vgl. Fig. 4) übereinstimmt, werden die Hubbügel 42 bzw. 43 so weit abgesenkt, daß die Vorderräder und Hinterräder zwischen den Rollenpaaren 38, 39 bzw. 40, 41 des Rollenprüfstands bis zur Berührung mit diesen Rollen eindringen können. Durch den Absenkvorgang haben die Abstützungen 10, 11, 12, 13, wie in den Fign. 4, 6 und 7 näher beschrieben, ihre Sicherheitspositionen eingenommen, so daß durch die Ausgestaltung des Skids 1, wie in den Fign. 1 und 2 erläutert, und die in den Fign. 4, 6 und 7 zu erläuternden Sicherheitspositionen der Abstützungen 10, 11 und 13 ein völlig gefahrloses Arbeiten am Rollenprüfstand 37 durchgeführt werden kann. Zufolge Verschiebbarkeit des Rollenpaares 40, 41 für die Hinterräder in horizontale Richtung läßt sich dieser Prüfstand in Verbindung mit dem Skid 1 ebenfalls universell für Fahrzeuge mit verschiedenen Radständen einsetzen. Nach beendeter Prüfung wird die gemäß Fig. 2 aus heb- und senkbaren Fördergurten bestehende Fördereinrichtung bzw. die heb- und senkbare Spurkranzrollenbahn 44 so weit angehoben, daß der Skid 1 über das Prüfstandniveau zum nächsten Prüfstand mittels der Förderbahnen transportiert wird. Handelt es sich bei dem Rollenprüfstand um den letzten Prüfstand, bleibt nach erfolgreicher letzter Prüfung der Skid in seiner abgesenkten Lage und das Fahrzeug kann über den Skid auf dem Prüfstandniveau aus dem Prüfstand herausfahren.

In Fig. 4 ist in einem Querschnitt der Skid 1 im abgesenkten Zustand dargestellt, bei dem zufolge der drehbeweglichen Abstützungen 10, 13 um die Achsen 14, 17 beim Absenken des Skids 1 über eine Klappkante 47 bzw. 48 die Abstützungen nach oben in die Vertikale bewegt werden. In Fig. 4 ist das Vorderräderpaar 33, 33' im eingetauchten Zustand dargestellt. In schematischer Darstellung sind hierbei auch die Rollen 38, 38' als Rollenpaare 38, 39 dargestellt.

Anstelle der Klappkanten 47, 48 in den Prüfständen können auch in den Längsholmen 3, 4 des Skids 1 vertikal ausfahrbare Stößel 49 bzw. 50 vorgesehen sein, die ebenfalls in der Lage sind, die Abstützungen 10, 11, 12 und 13 aus der Horizontalen in die Vertikale zu bewegen. Dies geschieht insbesondere immer dann, wenn es sich um andere wie Rollenprüfstände handelt, bei denen ein Absenken des Skids 1 nicht erforderlich ist, weil die Meß- und Prüfeinrichtungen durch die Öffnungen 31 hindurch bewegbar mit den Aufstandsflächen der Räder direkt in Verbindung gebracht werden können, so daß die Förderbahnen nicht abgesenkt werden müssen. Dies gilt insbesondere für Rüttelprüfstände, Achseinstellprüfstände, Prüfstände um das Lenkmoment und den Lenkausschlag feststellen zu können, wenn es sich bei den zu untersuchenden und zu prüfenden bzw. nachzuarbeitenden Bauteilen, nach ihrer Herstellung oder bei einer Prüfung in regelmäßigen Abständen, um Fahrzeuge handelt. Im Falle schwerer Bauteile, wie Kraft- und Arbeitsmaschinen, die später auch stationär angeordnet sein können, können ebenfalls ohne Absenkung der Förderbahnen durch die Öffnungen 31 Meß- und Prüfgeräte hindurchgeführt werden, um beispielsweise Schwingungsbeeinflussungen dieser Maschinen an ihrem späteren Aufstellungsort bereits bei der Herstellung und Endmontage feststellen zu können und entsprechende Änderungen vornehmen zu können.

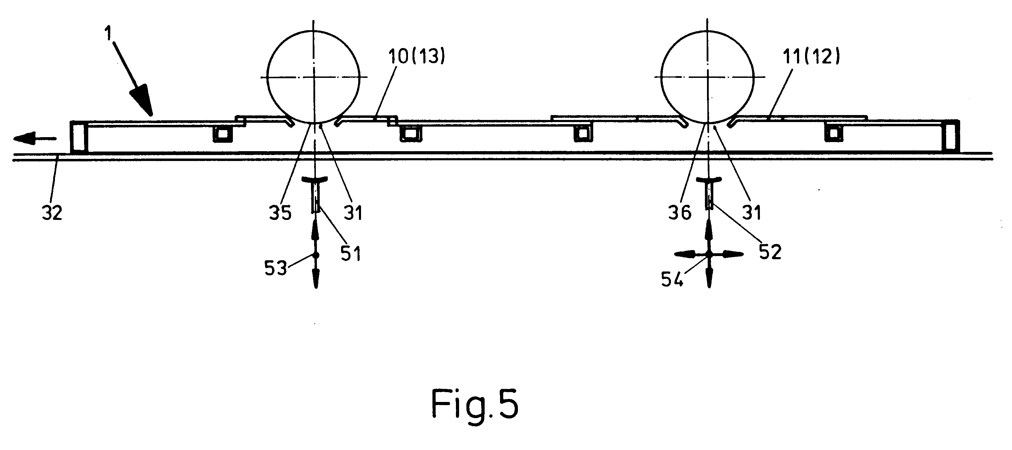

Fig. 5 zeigt ein derartiges Beispiel, bei dem der Skid 1 ohne Absenkung auf der Förderbahn, bestehend aus Fördergurten 32, verbleibt, während Prüfeinrichtungen 51 bzw. 52, die wieder an die Radstände und Spurbreiten des jeweils zu untersuchenden Fahrzeugs angepaßt werden können, durch die Öffnungen 31 der Abstützungen 10 bzw. 13 und 11 bzw. 12 hydraulisch, pneumatisch oder elektrisch entsprechend den Doppelpfeilen 53 bzw. 54 in Eingriff mit den Aufstandsflächen 35 und 36 der Vorder- und Hinterräder beim Ausführungsbeispiel eines Fahrzeugs gebracht werden können.

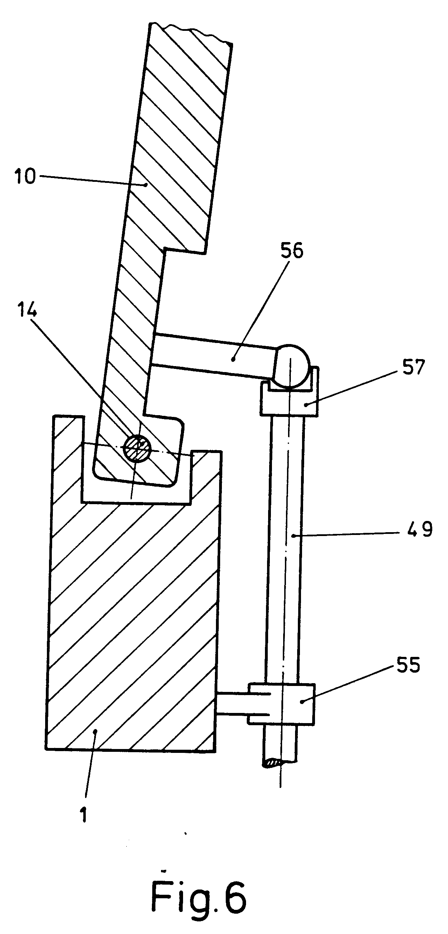

In Fig. 6 ist am Beispiel einer Abstützung 10 die Funktion des Anhebens dieser Abstützung dargestellt. Am Längsholm ist über eine Halterung 55 der vertikal ausfahrbare Stößel 49 angeordnet. Nachdem das zu untersuchende Bauteil in der Prüf- oder Meßeinrichtung eingelagert wurde und somit von der Abstützung 10 freigekommen ist, wird durch Ausfahren des Stößels 49 ein Zapfen 56 vom Stößelkopf 57 erfaßt. Durch das vertikale Ausfahren des Stößels 49 wird somit die Abstützung 10 in eine vertikale Richtung angehoben, nachdem sich die Abstützung um die Achse 14 drehen kann.

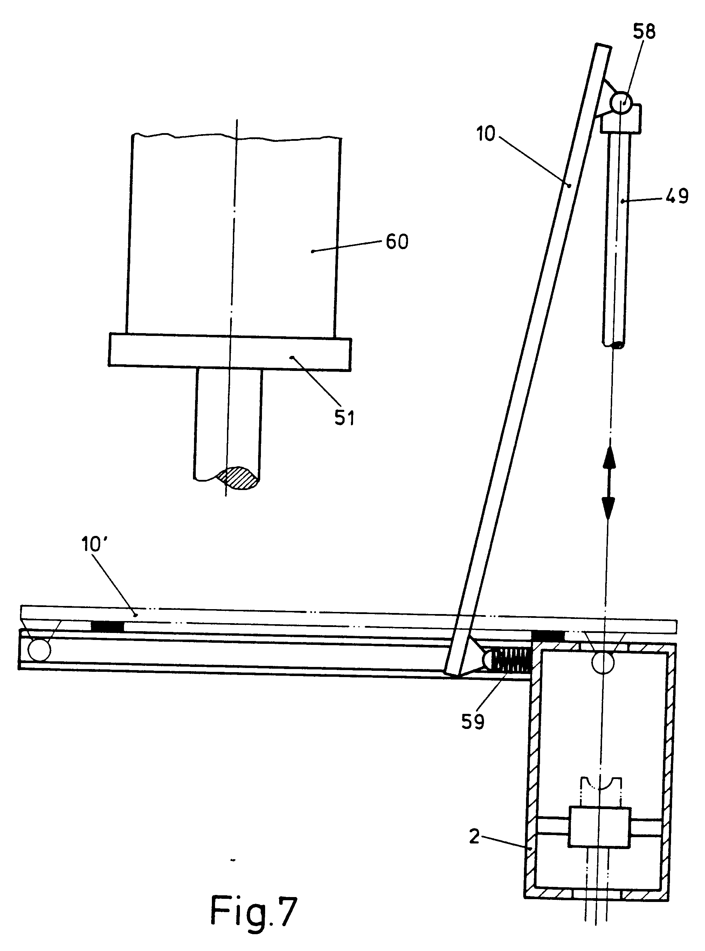

Fig. 7 zeigt eine andere Anhebung der Abstützung 10. Durch einen im Inneren des Längsholms 2 angeordneten vertikal beweglichen Stößel 49 wird die Abstützung 10 an einer Rast 58 ergriffen und gegen eine Feder 59 aus ihrer horizontalen Lage 10' in die vertikale Lage 10 verbracht. Beim Absenken des vertikal ausfahrbaren Stößels 49 unterstützt die Feder 59 die Rückkehr der Abstützung 10 in die horizontale Lage. Es wird in diesem Falle angenommen, daß eine Schwingungsprüfeinrichtung 51 das Rad 60 eines zu untersuchenden Bauteils abstützt.

## Patentansprüche

1. Mitnahmeeinrichtung (1) mit einem Transportrahmen (2, 3, 4, 5) und Abstützungen (Skid) zum Fördern insbesondere herzustellender Fahrzeuge durch Montage-, Prüf- und weitere Arbeitsplätze, wobei der Skid (1) wie das Kraftfahrzeug auch, während der Montage, Prüfung und der weiteren Bearbeitung im Montage-, Prüf- und weiteren Arbeitsplatz verbleibt, dadurch gekennzeichnet, daß in die vom Transportrahmen (2, 3, 4, 5) umschlossene ebene Fläche lediglich vier, insbesondere an den Innenseiten der beiden Längsholme (2, 3) angeordnete Abstützungen (10, 11, 12, 13) zur Aufnahme der Räder (33, 33', 34, 34') eines Kraftfahrzeugs hineinragen.

2. Mitnahmeeinrichtung nach Anspruch 1, dadurch gekennzeichnet, daß die Abstützungen (10, 11, 12, 13) im Bereich der Aufstandsflächen (35, 35', 36, 36') der Räder (33, 33', 34, 34') Öffnungen (31) tragen und daß mindestens ein Paar zueinander ausgerichteter Abstützungen (11, 12) an den Längsholmen (2, 3) längsverschiebbar angeordnet sind.

3. Mitnahmeeinrichtung nach Anspruch 2, dadurch gekennzeichnet, daß mindestens für die zwischen den beiden Abstützungen (10, 11 bzw. 12, 13) an der jeweiligen Längsholmseite (2 bzw. 3) entstehenden Öffnungen und die Öffnung zwischen Abstützungen (10, 13 bzw 11, 12) und dem nächstliegenden Querholm (4 bzw. 5) des Transportrahmens (2, 3, 4, 5) eine Abdeckung (23 bzw. 24 bzw. 27 bzw. 28) vorgesehen ist.

4. Mitnahmeeinrichtung nach Anspruch 2, dadurch gekennzeichnet, daß in der vom Transportrahmen (2, 3, 4, 5) umschlossenen Fläche eine Abdeckung (27, 23, 28, 24) umläuft) die im Bereich der Abstützungen (10, 11, 12, 13) Öffnungen aufweist, und deren Erstreckung auf allen vier Seiten nach Innen gleich ist der nach Innen weisenden Ersteckung der Abstützungen (10, 11, 12, 13).

5. Mitnahmeeinrichtung nach einem der vorhergehenden Ansprüche, dadurch gekennzeichnet, daß die Abstützungen (10, 11, 12, 13) über im Bereich der Längsholme, (2, 3) Achsen (14, 15, 16, 17) oder Zapfen mit den Längsholmen (2, 3) verbunden sind und daß an den Längsholmen (2, 3) oder an den Abdeckungen (27, bzw. 23 bzw. 24 bzw. 28) Arretierungen (17, 17a) für die Abstützungen (10, 11, 12, 13) vorgesehen sind.

6. Mitnahmeeinrichtung nach einem der vorhergehenden Ansprüche, dadurch gekennzeichet, daß jeder Abstützung (10, 11, 12, 13) mindestens ein am Längsholm (2, 3) angeordneter, vertikal ausfahrbarer Stößel (49) zugeordnet ist, der nach Unterstützung der Aufstandsflächen (35, 35', 36, 36') der Räder (33, 33', bzw. 34, 34') durch Prüf- oder Hilfseinrichtungen (51, 51', 52, 52' bzw. 42, 43) und Abheben des einzelnen Fahrzeugrades (33 bzw. 33'bzw 34 bzw. 34') oder der Fahrzuegräder (33, 33', 34, 34', bzw. 33, 33', 34, 34') von der Abstützung (10, 11, 12, 13) durch Absenken des Skids 1 oder Anheben der Prüf- oder Hilfseinrichtungen (51, 51', 52, 52', bzw. 42, 43) oder durch gleichzeitige Anwendung beider Bewegungen die Abstützung (10, 11, 12, 13) aus einer horizontalen in eine vertikale Lage bewegt wird.

7. Mitnahmeeinrichtung nach einem der vorhergehenden Ansprüche, dadurch gekennzeichnet, daß die Abstützung (10, 11, 12, 13) federbelastet (60) an den Arretierungen (17, 17a) anliegt.

**Claims**

1. Transfer apparatus (1) with a transport frame (2, 3, 4, 5) and supports (skid) for the conveyance in particular of vehicles undergoing manufacture through assembly, testing and further workplaces, where the skid (1), like the motor vehicle also, remains during the assembly, testing and further handling in the assembly, testing and further workplace, **characterised in that,** for the accommodation of the wheels (33, 33', 34, 34') of a motor vehicle, there project into the level area surrounded by the transport frame (2, 3, 4, 5) only four supports (10, 11, 12, 13) arranged in particular on the inner sides of the two longitudinal members (2, 3).

2. Transfer apparatus according to claim 1, **characterised in that** the supports (10, 11, 12, 13) have openings (31) in the region of the contact surfaces ( 35, 35, , 36, 36') of the wheels (33, 33', 34, 34') and that at least one pair of mutually aligned supports (11, 12) is arranged longitudinally displaceable on the longitudinal members (2, 3).

3. Transfer apparatus according to claim 2, **characterised in that** at least for the openings created between the two supports (10, 11 or 12, 13) on the respective longitudinal member side (2 or 3) and the opening between supports (10, 13 or 11, 12) and the nearest transverse member (4 or 5) of the transport frame (2, 3, 4, 5) a cover (23 or 24 or 27 or 28) is provided.

4. Transfer apparatus according to claim 2, **characterised in that** in the area surrounded by the transport frame (2, 3, 4, 5) a peripheral cover (27, 23, 28, 24) is situated, which exhibits openings in the region of the supports (10, 11, 12, 13) and whose extension inwards an all four sides is equal to the inwards pointing extension of the supports (10, 11, 12, 13).

5. Transfer apparatus according to any one of the preceding claims, **characterised in that** the supports (10, 11, 12, 13) are connected to the longitudinal members (2, 3) via axles (14, 15, 16, 17) or pins in the region of the longitudinal members (2, 3) and that on the longitudinal members (2, 3) or on the covers (27 or 23 or 24 or 28) stops (17, 17a) for the supports (10, 11, 12, 13) are provided.

6. Transfer apparatus according to any one of the preceding claims, **characterised in that** there is assigned to each support (10, 11, 12, 13) at least one vertically extendable plunger (49) arranged on the longitudinal member (2, 3), which, after the supporting of the contact surfaces (35, 35', 36, 36') of the wheels (33, 33', or 34, 34') by test or auxiliary devices (51, 51'. 52, 52' or 42, 43) and after removal from the support (10, 11, 12, 13) of the individual vehicle wheel (33 or 33') or (34 or 34') or of the vehicle wheels (33, 33', 34, 34' or 33, 33', 34, 34') by lowering of the skid 1 or lifting of the test or auxiliary devices (51, 51', 52, 52' or 42, 43), or by simultaneous application of both movements, moves the support (10, 11, 12, 13) from a horizontal into a vertical position.

7.  Transfer apparatus according to any one of the preceding claims, **characterised in that** the support (10, 11, 12, 13) rests spring-loaded (60) against the stops (17, 17a).

**Revendications**

1.  Dispositif de transport (1) comprenant un cadre de transport (2,3,4,5) et des supports (skid), pour le transport de véhicules à moteur, en particulier en cours de fabrication, en passant par les postes de montage, de contrôle et autres, où le skid (1) ainsi que le véhicule, pendant le montage, le contrôle et le reste de la fabrication restent au poste de montage, de contrôle et autres, caractérisé en ce que, dans la surface plane, entourée par le cadre de transport (2,3,4,5), seuls quatre appuis (10,11,12,13), disposés en particulier sur les faces intérieures des deux montants longitudinaux (2,3), pénètrent pour recevoir les roues (33,33',34,34') d'un véhicule automobile.

2.  Dispositif de transport selon la revendication 1, caractérisé en ce que les appuis (10,11,12,13) portent des ouvertures (31), dans la zone des surfaces de pose (35,35',36,36') des roues (33,33',34,34'), et qu'au moins un couple d'appuis (11,12) orientes l'un vers l'autre sont disposés déplaçables longitudinalement, sur les montants longitudinaux (2,3).

3.  Dispositif de transport selon la revendication 2, caractérisé en ce qu'un recouvrement (23, 24, 27, ou 28) est prévu, au moins pour les ouvertures créées entre les deux appuis (10,11, ou 12,13) sur la face de montant longitudinale (2 ou 3) et l'ouverture entre appuis (10,13, ou 11,12) et le montant transversal (4 ou 5), qui suit, du cadre de transport (2,3,4,5).

4.  Dispositif de transport selon la revendication 2, caractérisé en ce que, dans la surface, entourée par le cadre de transport (2,3,4,5), est prévu un recouvrement (27,23,28,24) qui présente des ouvertures dans la zone des appuis (10,11,12,13), et dont l'étendue vers l'intérieur, sur la totalité des quatre côtés, est égale à l'étendue, vers l'intérieur, des appuis

(10,11,12,13).

5.  Dispositif de transport selon l'une des revendications précédentes, caractérisé en ce que les appuis (10,11,12,13) sont reliés aux montants longitudinaux (2,3) par l'intermédiaire d'axes (14,15,16,17) ou de tourillons disposés dans la zone des montants longitudinaux (2,3) et que sur les montants longitudinaux (2,3) ou sur les recouvrements (37, 23, 24 ou 28) sont prévus des butées (17,17a) pour les appuis (10,11,12,13).

6.  Dispositif de transport selon l'une des revendications précédentes, caractérisé en ce qu'à chaque appui (10,11,12,13) est associé au moins un poussoir (49), déployable verticalement, disposé sur le montant longitudinal (2,3), qui est déplacé, d'une position horizontale en une position verticale, après la mise en appui des surfaces de pose (35,35',36,36') des roues (33,33' ou 34,34') grâce à des dispositifs de contrôle ou auxiliaires (51,51',52,52', ou 42,43) et le soulèvement des différentes roues du véhicule (33, 33', 34, ou 34') ou des roues de véhicule (33,33',34,34', ou 33,33',34,34') de l'appui (10,1,12,13), par abaissement du skid 1 ou soulèvement des dispositifs de contrôle ou auxiliaires (51,51',52,52', ou 42,43), ou par utilisation simultané des deux mouvements.

7.  Dispositif de transport selon l'une des revendications précédentes, caractérisé en ce que les appuis (10,11,12,13) appuient sur les butées (17,17a) en étant sollicités élastiquement (60).

Fig. 1

EP 0 343 270 B1

Fig.2

EP 0 343 270 B1

Fig.3

EP 0 343 270 B1

Fig.4

Fig.5

EP 0 343 270 B1

Fig.6

Fig.7